# EUROPEAN PATENT SPECIFICATION

(11) **EP 3 307 961 B1**
(45) Date of publication and mention of the grant of the patent: **24.07.2019**
(21) Application number: 16733203.0
(22) Date of filing: 01.06.2016
(51) Int. Cl.: E03B 3/28, B01D 5/00

(54) **PORTABLE DEVICE FOR PRODUCING DRINKING WATER FROM ATMOSPHERIC MOISTURE**
TRAGBARE VORRICHTUNG ZUR TRINKWASSERHERSTELLUNG AUS ATMOSPHÄRENFEUCHTIGKEIT
DISPOSITIF PORTABLE POUR PRODUIRE DE L'EAU POTABLE À PARTIR DE L'HUMIDITÉ ATMOSPHÉRIQUE

(30) Priority: 11.06.2015 IT UB20150938
(43) Date of publication of application: 18.04.2018
(73) Proprietor: Morelli S.p.A., 50127 Firenze (IT); Di Benedetti, Ivano, 19125 La Spezia (IT)
(72) Inventor: DI BENEDETTI, Ivano, 19125 La Spezia (IT); MORELLI, Fausto, 50124 Firenze (IT)
(74) Representative: Soldatini, Andrea
(86) International application number: PCT/IB2016/053224
(87) International publication number: WO 2016/198991

(56) References cited:
- WO-A1-2005/019542
- US-A- 5 301 516
- US-A- 6 029 461
- US-A1- 2004 244 398

## Description

### Field of the invention

The present invention relates to a portable device for producing drinking water from atmospheric moisture according to the preamble of claim 1. Such a device is known from the document WO 2005/019542 A1.

### Background of the invention

During the last few years, both because of changing lifestyles in our society and because of the deterioration in the organoleptic qualities of mains water, there has been a considerable increase in the consumption of bottled mineral water. However, the massive use of this type of product has a significant environmental impact due to the problems associated with disposal of the plastic bottles and drums of the water dispensers and the pollution caused by the chain for production and distribution of bottled water as a whole.

Also known are water production plants which make use of the atmospheric moisture which is condensed in an evaporator of a refrigeration unit. The moisture is collected, filtered and sterilized and remineralized so as to obtain at the end of the process a water which is comparable to spring water. These plants may normally be divided into two categories:
- domestic and office machines, designed to replace conventional drum-type dispensers, equipped with refrigeration units which have a low power and therefore a limited daily production capacity;
- communal or outdoor machines, which are larger in size and equipped in some cases with an on-board electric generator so as to be able to operate also independently of the electricity mains.

These known systems are generally heavy and bulky and powered by AC power and therefore dependent on a mains power connection.

Another drawback of the aforementioned machines is the low efficiency of the refrigeration unit at a high ambient temperature.

### Summary of the invention

The object of the present invention is to overcome these drawbacks by providing a device for producing drinking water from atmospheric moisture, which is small in size and independent of the electric mains supply so that it may be installed also in vehicles with living accommodation such as camper vans or caravans or also small-size boats.

A further object of the device according to the present invention is to provide a high refrigerating efficiency also at high ambient temperatures (as for example is the case when used in tropical areas or subtropical areas) without having to use larger size air condensers (referred to by the term "tropicalized") which would make the device bulky and therefore difficult to transport.

These and other objects are achieved by a device according to the invention, the main characteristic features of which are defined by claim 1 in the accompanying claims. Further important characteristic features are also contained in the dependent claims.

### Brief description of the drawings

The characteristic features and advantages of the device according to the invention will emerge more clearly from the following description of an embodiment thereof, provided by way of a non-limiting example with reference to the attached drawings in which:
- Figure 1 shows an operating diagram of the device according to the invention;
- Figure 2 shows the device connected to a power production source;
- Figure 3 shows a perspective view of the device according to Figure 2 without a housing;

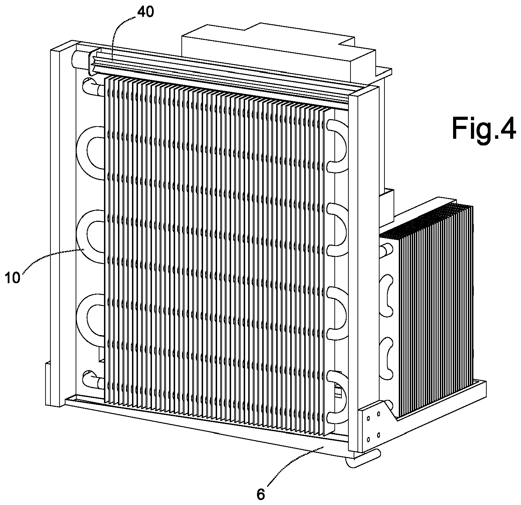

- Figure 4 is a view of a refrigeration unit of the device shown in isolation and without any components for greater illustrative clarity;
- Figure 5 shows in isolation a filtering and storage unit of the device; and
- Figure 6 is a cross-sectional view of the device.

### Detailed description of the invention

With reference to said figures, the device D according to the invention comprises a heat exchanger or evaporator 1. The heat exchanger, according to a conventional constructional solution, is composed principally of a coil 10 inside which a refrigerant liquid flows. The latter is produced by a refrigeration unit 2 and is introduced into the coil at a given pressure by means of a regulating valve 3. In detail, the refrigerant liquid is introduced into the heat exchanger at low pressure, namely a pressure ranging, preferably but not exclusively, between 3 and 4 bar. Preferably, but not exclusively, the refrigerant liquid is an alkyl halogenide. The pressure values indicated above correspond to evaporation temperatures of the refrigerant liquid comprised between about 2 and 8 degrees centigrade.

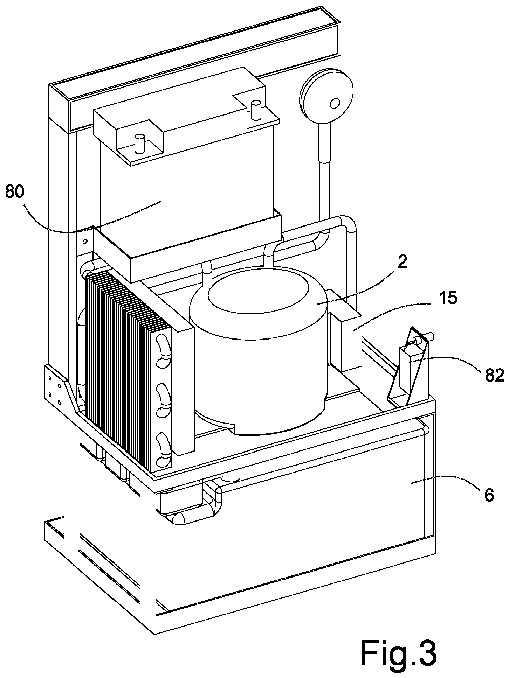

The refrigeration unit is managed by a control unit 15 of the known type and therefore not described in detail, being shown only schematically in Figure 3.

The device further comprises means for introducing forced air 4 into the exchanger. In particular, these means comprise a blower 40 which forcedly conveys the air from the outside towards the heat exchanger 1 and in particular onto the coil 10. Advantageously a filter 41 is provided downstream of the blower so as to intercept any solid impurities present in the air, such as dust and/or pollutants.

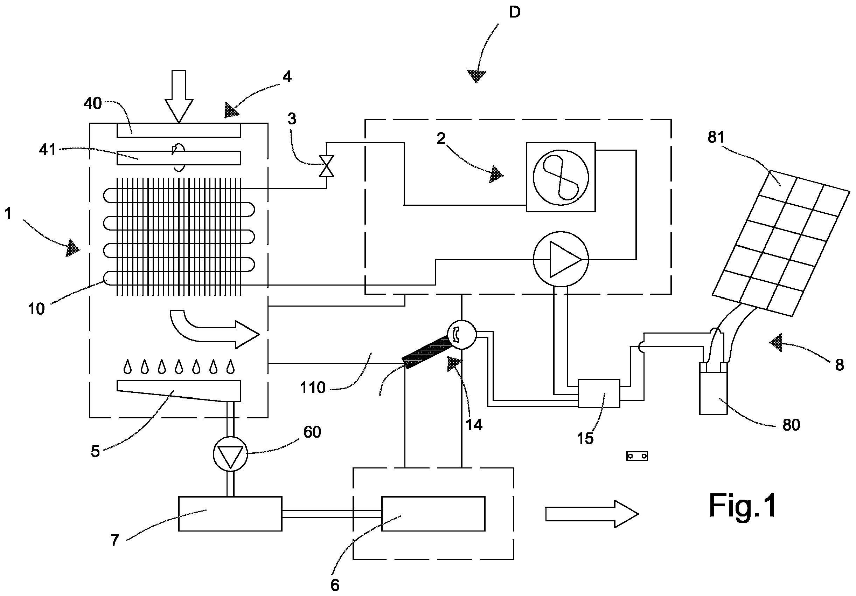

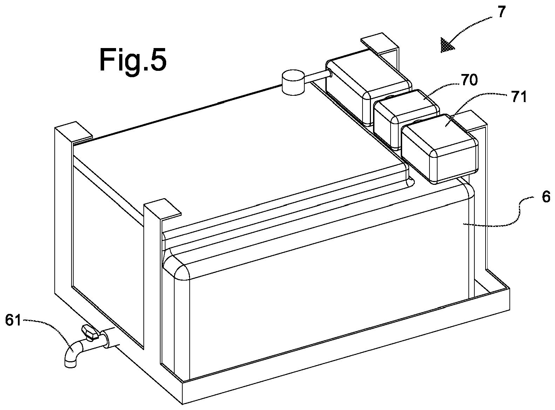

In accordance with that known per se, the forced air in contact with the walls of the exchanger transfers its heat to the refrigerant liquid and this drop in temperature causes condensation of the water vapour contained in the said air. This condensed water is formed as droplets on the walls of the exchanger and is collected by falling inside a tray 5 and from here inside a tank 6. The transfer of the water from the tray to the tank may be performed by means of gravity or in a forced manner by means of a pump 60 (shown schematically in Figure 1). Potabilization means 7 (shown in Figure 5), such as a disinfection system 70 and a filtering system and remineralization system 71, are provided downstream of the pump, before the entry point into the tank 6. The water contained in the tank 6 is therefore potable, i.e. suitable for drinking; a tap 61 for drawing off the water is therefore provided.

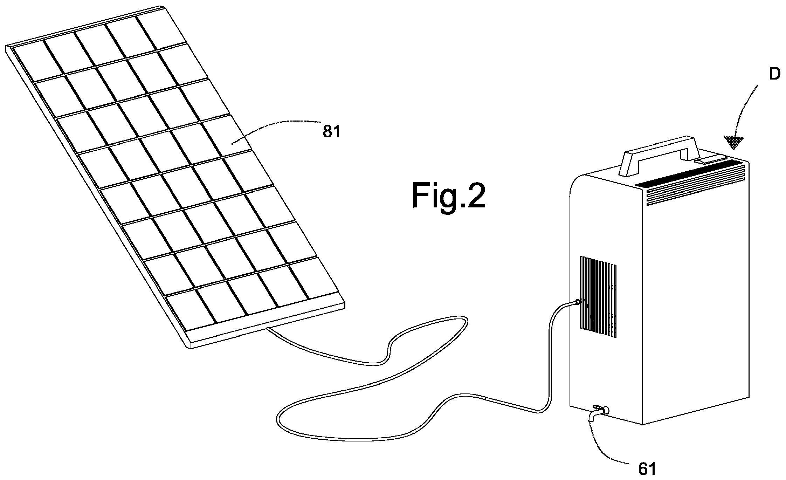

The device also comprises first electric power supply means 8, shown schematically in Figures 1, 2 and 3. These means comprise a battery 80, for example but not exclusively, a lithium-ion battery, which supplies electric energy to the device and in particular to the blower, the refrigeration unit and the pump 60.

In a preferred constructional solution the first electric power supply means are powered by the energy generated by second electric energy means of the renewable type. In particular, these means comprise a solar panel 81 which is connected to the lithium-ion battery by means of a charge controller 82. The charge controller supplies the battery with the current generated by the solar panel at the desired voltage. For example, this value may be comprised between 12 and 24 volts, depending on the voltage of the battery to be powered.

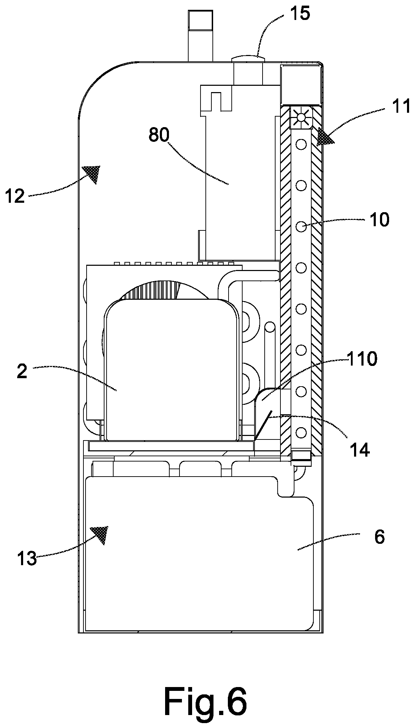

In even greater detail, with particular reference to Figure 6, the evaporator 1 is contained inside a first insulated compartment 11 for increasing the heat exchange efficiency of the said evaporator. A second compartment 12, situated along the first insulated compartment, instead contains at least the refrigeration unit and the battery. A third compartment 13 contains instead at least the tank for collecting the potabilized water. The first compartment 11 communicates with the third compartment 13 and with the second compartment 12 by means of a branched duct 110 (schematically shown also in Figure 1). Deviation means 14 act inside the duct 110 so as to deviate selectively the air output from the evaporator towards the tank or the refrigeration unit.

The deviation means comprise a partition 14 which intercepts either branch of the duct so as to direct the air flow from the first insulated compartment 11 to the second compartment 12 or third compartment 13. The partition is operated depending on the external atmospheric conditions. When, in fact, the ambient temperature remains at optimum values, namely below a threshold value, the partition intercepts the duct 110 and the air which has passed through the evaporator and is therefore at a temperature lower than atmospheric temperature is directed into the third compartment where a refrigerating action on the water collection tank 6 occurs. When, instead, the ambient temperature is above this threshold value the partition is activated so as to free the duct 110 so that the cold air enters into the second compartment in order to help cool or in any case prevent overheating of the refrigeration unit and the battery. This circulation of the cold air inside the second compartment therefore assists operation of the refrigeration unit, thus increasing the energy efficiency of the device as a whole.

The threshold value is preferably comprised between 28 and 35 degrees centigrade; one value of this threshold value is preferably, but not exclusively, 30 degrees centigrade, depending on an atmospheric humidity value of between 50 and 55 percent. Optionally, with an increase in the humidity value, the threshold value may be indicated at a lower temperature.

Operation of the partition 140 is controlled by control means such a control board 15 (shown schematically in Figure 1 and Figure 6) which detects the external atmospheric temperature and, upon reaching the aforementioned threshold value, activates the deviation means.

The device according to the invention, in addition to solving the problems of the known devices described above, offers several novel advantages.

In detail, owing to the deviation means and the capacity to deviate the cold air either to the water collection tank or to the refrigeration unit, a device with a high refrigerating efficiency even at high ambient temperatures (e.g. as in tropical or subtropical areas) is obtained, without having to employ larger size (so-called "tropicalized") air condensers.

The device is therefore compact and therefore may be easily transported and/or installed also on movable transportation means equipped with living accommodation (camper vans, caravans) or boats.

This installation versatility is also possible since the device is in fact independent of the electric mains, being powered with renewable electric energy generating means. Apart from the solar panel solution described above, the device may also be powered by other sources, such as micro wind power systems.

Moreover, as already mentioned above, the plant is particularly compact, also owing to the fact that the refrigeration unit is small in size, as is the lithium-ion battery which has a high charging level, while being low-weight.

Still with a view to transportability of the device, in the case where solar panels are used, the latter may be of the flexible laminated-plastic type. This type of panel, for the same electric power produced, weighs about an eighth of conventional photovoltaic panels and is not excessively prone to breakage. Similarly, in the case of micro wind power systems, micro wind generators with folding vanes may be chosen.

Finally, it is also necessary to mention the capability of the device to function as a dehumidifier. In fact, by collecting the external atmospheric moisture, it reduces the overall humidity level within the installation area.

The present invention has been described hitherto with reference to preferred embodiments thereof. It is to be understood that other embodiments relating to the same inventive idea may exist, all of these falling within the scope of protection of the claims which are attached below.

## Claims

1. Device for the production of drinking water from the moisture contained in an atmospheric air flow, comprising: - an evaporator (1); - a refrigeration unit (2) for the production of a refrigerant liquid which is circulated in said evaporator; - blowing means (4) for forcedly conveying an atmospheric air flow towards said evaporator; - a tank for collecting the water obtained by the condensation of the moisture contained in said air for effect of the heat exchange between said air flow and said refrigerant liquid realized in said evaporator; - electric power supply means (8); - control means adapted at least to measure the external atmospheric temperature; said device being **characterized in that** it also comprises deviation means (14) for deviating selectively the refrigerated air exiting from said evaporator (1) towards said refrigeration unit (2) or towards said tank (6) according to the value of the external atmospheric temperature measured by said control means, so that when the atmospheric temperature is lower than a given threshold value said air is directed towards said tank, whereas if said atmospheric temperature is higher than said threshold value said air is directed towards said refrigeration unit (2).

2. The device according to claim 1, wherein said evaporator (1) is housed in a first compartment (11) of said device, said refrigeration unit and said tank being housed respectively in a second compartment (12) and third compartment (13) of said device, said first compartment (11) communicating with said second and third compartments by means of a branched duct (110), said deviation means (14) being operatively housed inside said duct.

3. The device according to claim 2, wherein said deviation means comprise a mobile partition (14) moved to close or open one or other branch of said duct so as to convey said air flow towards the second compartment (12) or third compartment (13).

4. The device according to claim 2 or 3, wherein said first compartment (11) is insulated.

5. The device according to any one of the preceding claims, wherein said electrical power supply mean comprises a lithium-ion battery (80).

6. The device according to claim 5, wherein said battery is powered by renewable electric energy means such as a solar panel (81).

7. The device according to claim 5 or 6 wherein a charge controller (82) is arranged between said renewable electric energy means and said lithium-ion battery so as to convert the energy generated by said means into the voltage required for powering said battery.

8. The device according to claim 7, wherein said voltage is comprised between 12 and 24 volts.

9. The device according to any one of the preceding claims, wherein said threshold value is comprised between 28 and 35 degrees centigrade.

10. The device according to claim 9, wherein said threshold value corresponds to 30 degrees with an atmospheric humidity value comprised between 50 and 55 per cent.

11. The device according to any one of the previous claims, wherein said device also comprises means (7) for potabilization of said condensated moisture, such as a disinfection system (70) and a filtering and remineralization system (71) situated upstream of said tank (6) and downstream of said evaporator (1).

## Patentansprüche

1. Vorrichtung zur Herstellung von Trinkwasser aus der Feuchtigkeit, die in einer atmosphärischen Luftströmung enthalten ist, enthaltend: - einen Verdampfer (1); - eine Kühleinheit (2) für die Herstellung einer Kühlflüssigkeit, die in dem Verdampfer zirkuliert wird; - Gebläseeinrichtungen (4), um eine atmosphärische Luftströmung zu dem Verdampfer hin zu fördern; - einen Tank zum Sammeln des Wassers, das durch die Kondensation der Feuchtigkeit erhalten wird, die in der Luft enthalten ist, aus der Wirkung des Wärmeaustausches, der in dem Verdampfer realisiert wird, zwischen der Luftströmung und der Kühlflüssigkeit; - elektrische Leistungsversorgungseinrichtungen (8); - Steuereinrichtungen, die wenigstens dazu ausgelegt sind, um die externe atmosphärische Temperatur zu messen; wobei die Vorrichtung **dadurch gekennzeichnet ist, dass** sie auch Abzweigeinrichtungen (14) zum selektiven Abzweigen der gekühlten Luft, die von dem Verdampfer (1) ausgeht, zu der Kühleinheit (2) oder zu dem Tank (4) hin entsprechend dem Wert der externen atmosphärischen Temperatur enthält, die von den Steuereinrichtungen gemessen wird, so dass, wenn die atmosphärische Temperatur niedriger als ein gegebener Schwellenwert ist, die Luft zu dem Tank hin gerichtet wird, während, wenn die atmosphärische Temperatur höher als der Schwellenwert ist, die Luft zu der Kühleinheit (2) hin gerichtet wird.

2. Vorrichtung nach Anspruch 1, wobei der Verdampfer (1) in einem ersten Kompartiment (11) der Vorrichtung untergebracht ist, wobei die Kühleinheit (2) und der Tank (4) entsprechend in einem zweiten Kompartiment (12) und einem dritten Kompartiment (13) der Vorrichtung untergebracht sind, wobei das erste Kompartiment (11) mit den zweiten und dritten Kompartimenten mittels einer verzweigten Leitung in Kommunikation ist, wobei die Abzweigeinrichtungen (14) operativ innerhalb der Leitung untergebracht sind.

3. Vorrichtung nach Anspruch 2, wobei die Abzweigeinrichtungen eine mobile Partition (14) enthalten, die bewegt wird, um eine oder die andre Abzweigung der Leitung zu schließen oder zu öffnen, um die Luftströmung zu dem zweiten Kompartiment (12) oder dritten Kompartiment (13) zu fördern.

4. Vorrichtung nach Anspruch 2 oder 3, wobei das erste Kompartiment (11) isoliert ist.

5. Vorrichtung nach einem der vorhergehenden Ansprüche, wobei die elektrischen Leistungsversorgungseinrichtungen (8) eine Lithium-Ionen-Batterie (80) enthalten.

6. Vorrichtung nach Anspruch 5, wobei die Batterie durch Einrichtungen für erneuerbare elektrische Energie, wie ein Solarpanel (81), versorgt wird.

7. Vorrichtung nach Anspruch 5 oder 6, wobei eine Ladungssteuerung (82) zwischen den Einrichtungen für erneuerbare elektrische Energie und der Lithium-Ionen-Batterie angeordnet ist, um die Energie, die durch die Einrichtungen erzeugt wird, in die Spannung zu konvertieren, die zum Versorgen der Batterie erforderlich ist.

8. Vorrichtung nach Anspruch 7, wobei die Spannung zwischen 12 und 24 V enthalten ist.

9. Vorrichtung nach einem der vorhergehenden Ansprüche, wobei der Schwellenwert zwischen 28 und 25 Grad Celsius enthalten ist.

10. Vorrichtung nach Anspruch 9, wobei der Schwellenwert 30 Grad bei einem atmosphärischen Feuchtigkeitswert entspricht, der zwischen 50 und 55 Prozent enthalten ist.

11. Vorrichtung nach einem der vorhergehenden Ansprüche, wobei die Vorrichtung auch Einrichtungen (7) für die Trinkbarmachung der kondensierten Feuchtigkeit enthält, wie ein Desinfektionssystem (70) und ein Filterungs- und Remineralisierungssystem (71), die stromaufwärts des Tanks (6) und stromabwärts des Verdampfers (1) angeordnet sind.

## Revendications

1. Dispositif pour la production d'eau potable à partir de l'humidité contenue dans un flux d'air atmosphérique, comprenant :
- un évaporateur (1) ;
- une unité de réfrigération (2) pour la production d'un liquide réfrigérant qui est mis en circulation dans ledit évaporateur ;
- des moyens de soufflage (4) pour acheminer de manière forcée un flux d'air atmosphérique vers ledit évaporateur ;
- un réservoir pour collecter l'eau obtenue par la condensation de l'humidité contenue dans ledit air par effet d'échange de chaleur effectué dans ledit évaporateur entre ledit flux d'air et ledit liquide réfrigérant ;
- des moyens d'alimentation électrique (8) ;
- des moyens de commande adaptés pour au moins mesurer la température atmosphérique extérieure ;
ledit dispositif étant **caractérisé en ce qu'**il comprend en outre des moyens de déviation (14) pour dévier sélectivement l'air réfrigéré sortant dudit évaporateur (1) vers ladite unité de réfrigération (2) ou vers ledit réservoir (6) en fonction dela valeur de la température atmosphérique extérieure mesurée par lesdits moyens de commande de façon que, lorsque la température atmosphérique est inférieure à une valeur de seuil donnée, ledit air soit dirigé vers ledit réservoir, tandis que, si ladite température atmosphérique est supérieure à ladite valeur de seuil, ledit air est dirigé vers ladite unité de réfrigération (2).

2. Le dispositif selon la revendication 1, dans lequel ledit évaporateur (1) est logé dans un premier compartiment (11) dudit dispositif, ladite unité de réfrigération et ledit réservoir étant logés respectivement dans un second compartiment (12) et un troisième compartiment (13) dudit dispositif, ledit premier compartiment (11) communiquant avec lesdits deuxième et troisième compartiments au moyen d'un conduit ramifié (110), lesdits moyens de déviation (14) étant logés de manière opérationnelle à l'intérieur dudit conduit.

3. Le dispositif selon la revendication 2, dans lequel lesdits moyens de déviation comprennent une cloison mobile (14) déplacée pour fermer ou ouvrir l'une ou l'autre branche dudit conduit de manière à acheminer ledit flux d'air vers le deuxième compartiment (12) ou le troisième compartiment (13).

4. Le dispositif selon l'une des revendications 2 et 3, dans lequel ledit premier compartiment (11) est isolé.

5. Le dispositif selon l'une quelconque des revendications précédentes, dans lequel lesdits moyens d'alimentation électrique comprennent une batterie au lithium-ion (80).

6. Le dispositif selon la revendication 5, dans lequel ladite batterie est alimentée par des moyens d'énergie électrique renouvelable tels qu'un panneau solaire (81).

7. Le dispositif selon l'une des revendications 5 et 6, dans lequel un contrôleur de charge (82) est disposé entre lesdits moyens d'énergie électrique renouvelable et ladite batterie lithium-ion de manière à convertir l'énergie générée par lesdits moyens en la tension requise pour alimenter ladite batterie.

8. Le dispositif selon la revendication 7, dans lequel ladite tension est comprise entre 12 et 24 volts.

9. Le dispositif selon l'une quelconque des revendications précédentes, dans lequel ladite valeur de seuil est comprise entre 28 et 35 degrés centigrades.

10. Le dispositif selon la revendication 9, dans lequel ladite valeur de seuil correspond à 30 degrés avec une valeur d'humidité atmosphérique comprise entre 50 et 55 pour cent.

11. Le dispositif selon l'une quelconque des revendications précédentes, dans lequel ledit dispositif comprend également des moyens (7) pour potabiliser ladite humidité condensée, tels qu'un système de désinfection (70) et un système de filtration et de reminéralisation (71) situés en amont dudit réservoir (6) et en aval dudit évaporateur (1).
